# EUROPEAN PATENT APPLICATION

(11) **EP 0 627 343 A1**
(43) Date of publication of application: **07.12.1994**
(21) Application number: 94201211.3
(22) Date of filing: 02.05.1994
(51) Int. Cl.: B60R 22/26, B60R 22/42, B60N 2/42

(54) **D-ring for seat belt restraints**

(30) Priority: 24.05.1993 US 65299
(71) Applicant: GENERAL MOTORS CORPORATION, Detroit Michigan 48202 (US)
(72) Inventor: Miller, Harold John, Mt Clemens, Michigan 48043 (US)
(74) Representative: Denton, Michael John

(57) **Abstract**

A vehicle seat and occupant restraint arrangement (7) for a vehicle (8) includes a seat pan member (2) having forward and rearward ends (4,6), a seat back rest frame (10) joined with the seat pan rearward end (6), the seat back rest frame (10) having an upper end (12), a D-ring (14) joined to the seat back rest frame (10) generally adjacent the upper end (12) of the seat back rest frame (10), an anchor (72) being generally fixed with respect to the vehicle (8), an occupant restraint belt (60) with a first end (80) operatively associated with the anchor (72), the restraint belt (60) being threaded through the D-ring (14), and a movable lock plate (38) mounted on legs of the D-ring (14) to catch the occupant restraint belt (60) upon sudden excessive acceleration of the vehicle (8) in the forward direction, so as to tension the restraint belt (60) between the D-ring (14) and the anchor (72) to minimise any angular movement of the seat back rest frame (10) rearwardly relative to the seat pan member (2).

## Description

The field of the present invention is that of a vehicle seat and occupant restraint belt arrangement as specified in the preamble of claim 1, particularly for vehicle seats in the forward row seating of dual row seating vehicles.

Most of the design restraints associated with vehicle seating are primarily concerned with preventing a vehicle seat going forward in a frontal impact crash of the vehicle. However, sometimes it is desirable to prevent a back rest of a front seat from possibly going rearwards in such an event. Presently, the main factors which prevent rearward movement of the seat back rest is the structural integrity of the seat. It is desirable to somehow utilise the occupant belt restraint system to aid in preventing the rearward movement of the seat back rest. Allowing the occupant restraint system to aid in preventing any rearward movement of the seat back rest in rear impact crashes would allow the vehicle seat to experience a reduction in mass and therefore aid in meeting the environmentally-mandated goal of reduction of vehicle weight to decrease fuel consumption, thereby helping to further cleanse the environment.

A vehicle seat and occupant restraint arrangement according to the present invention is characterised by the features specified in the characterising portion of claim 1.

To meet the above-noted challenges, the present invention, in a preferred embodiment, comprises a vehicle seat and restraint arrangement wherein a restraint belt is threaded through a D-clamp connected with an upper end of a seat back rest. Another end of the belt restraint is operatively associated with an anchoring mechanism which has portions positioned above and rearward of the seat back rest. The belt is freely allowed to move through the D-clamp in normal operation. Upon a sudden rear impact, the D-clamp closes, causing the restraint belt to be placed in tension between the D-clamp and the anchoring mechanism, which, in turn, causes a retention of the restraint belt to aid in the prevention of any possible rearward movement of the seat back rest in the vehicle.

The invention and how it may be performed are hereinafter particularly described with reference to the accompanying drawings, in which:
Figure 1 is a perspective view of a preferred embodiment of the present invention;
Figure 2 is a cross-sectional view taken along line 2-2 of Figure 1; and
Figure 3 is a perspective view taken along line 3-3 of Figure 2.

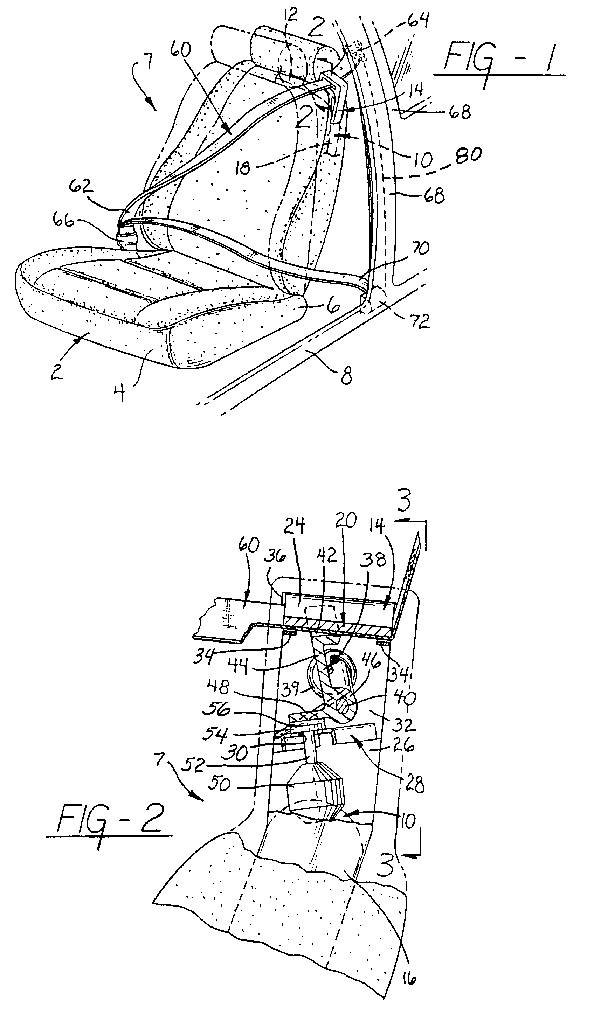

Referring to Figures 1 to 3, a vehicle seat and restraint arrangement 7 according to the present invention has a seat pan member 2 having a forward end 4 towards a forward end of a vehicle 8 and a rearward end 6 towards a rearward end of the vehicle 8. The pan member 2 is typically formed of a metallic material and has an encompassing elastomeric foam cushion which is covered by a suitable flexible membrane of cloth, vinyl or leather.

Joined towards the rearward end 6 of the seat pan member in either an adjustably tiltable manner or fixed manner is a seat back frame 10. The seat back frame 10 is also covered with a cushioning material to provide a back rest surface for contact with the vehicle occupant in a manner similar to the seat pan member 2. The seat back frame 10 is generally of an inverted U-shape having its ends joined to the seat pan member and having a cross-bar 12 adjacent its upper end.

Joined to an upper end of the seat back frame 10 is a D-ring 14. The attachment of the D-ring 14 to the frame will typically be by welding or other suitable attachment means. The D-ring 14 has a side arm 16 which is joined to a side 18 of the seat back rest frame 10. The D-ring 14 also includes an integrally-joined channel 20 having a first downwardly-extending leg 22, a cross-bar leg 24 and a second downwardly-extending leg 26 which mates with the cross-bar 12 of the seat back frame 10.

The D-ring 14 also has a cross-bridge 28 formed from sheet-metal, which has an aperture 30 formed therein. The cross-bridge 28 is joined with sidewalls 32 and two belt-alignment cross-bars 34. The cross-bridge 28, sidewalls 32 and alignment cross-bars 34 are also integrally joined to four edge flanges 36 which are respectively bent to wedge the cross-bridge 28 in position within the channel 20.

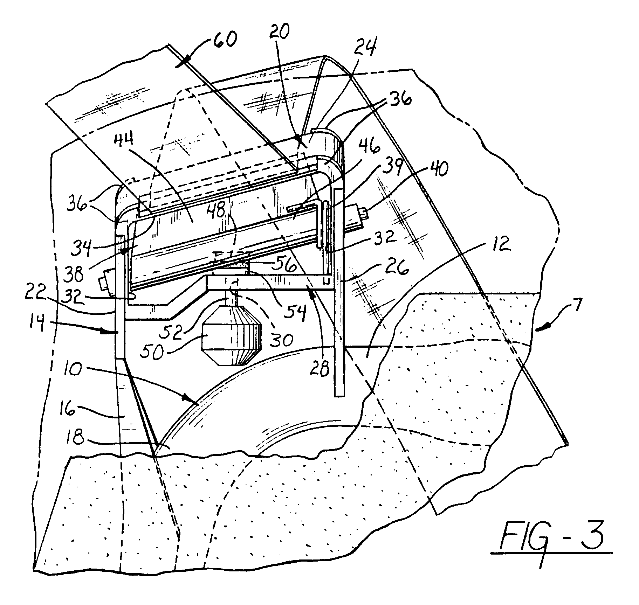

Above the cross-bridge 28 is a pivotally-mounted lock plate 38 which pivots on a cross-pin 40 projecting through the two channel legs 22,26 of the D-ring. The alignment cross-bars 34 provide a slotted aperture between the cross-bar 24 of the channel 20 and the alignment cross-bars 34, and align a restraint belt 60 inserted through the slotted aperture so as to keep the restraint belt 60 adjacent the top portion of the D-ring 14. In Figures 2 and 3, a front portion of the restraint belt 60 is elevated for clarity of illustration. The lock plate 38 has a locking surface 42, an arm 44, a cylindrical portion 46 which mounts on the cross-pin 40, and a projected flap 48.

A weight 50 is connected with an elongated member 52, which is in turn connected with a washer 54 which holds the weight 50 on the cross-arm 28. A rubber washer 56 is juxtaposed between the flap 48 and the washer 54 to prevent rattling noise. Typically, the rubber washer 56 will be connected with the washer 54. Under normal circumstances, the washer 54 will be held flat against the cross-bridge 28, and there will be a slight space between the rubber washer 56 and the projected flap 48. Upon an excessive acceleration of the vehicle caused by a rear impact, inertia will cause the weight 50 to pivot rearwardly (counter-clockwise as shown in Figure 2), tilting the washer 54 to pivot the projecting flap 48 of the locking plate, causing the locking plate 38 to catch and lock the restraint belt 60 against the cross-leg 24.

The restraint belt 60, which is also part of the shoulder harness, has an intermediate section 62 connected (or, as shown, looped) with a latch 66 for the seat belt and has a first end 80 going through a loop ring 64 on a D-pillar 68 of the vehicle 8. The ring 64 is positioned above and rearwards of the D-ring 14. The first end 80 and a second end 70 of the restraint belt are affixed with a dual drum retractor 72, which also locks upon a rear impact. Alternatively, the first end 80 of the restraint belt 60 may be directly anchored with the vehicle. Therefore, upon rear impact, any angular movement of the seat back frame 10 rearwardly will be restrained by the tension developed in the restraint belt 60 between the D-ring 14 and the loop ring 64 on D-pillar 68.

A low-force torsion lock spring 39 biases the lock plate 38 in a non-locking position (counter-clockwise as shown in Figure 2) so that the restraint belt 60 may pass freely through the D-ring 14 during normal operation of the D-ring 14.

Whilst this invention has been described in terms of a preferred embodiment thereof, it will be appreciated that this preferred embodiment could readily be adapted by one skilled in the art. Accordingly, the scope of this invention is to be considered limited only by the scope of the following claims.

The disclosures in United States patent application no. 065,299, from which this application claims priority, and in the abstract accompanying this application are incorporated herein by reference.

## Claims

1. A vehicle seat and occupant restraint arrangement (7) for a vehicle (8) having forward and rearward ends, in which the arrangement comprises: a seat pan member (2) having forward and rearward ends (4,6); a seat back frame (10) joined with the rearward end (6) of the seat pan, the seat back frame (10) having an upper end (12); a first anchor means (72) generally fixable with respect to the vehicle (8); and an occupant restraint belt (60) with a first end (80) operatively associated with the first anchor means (72), characterised in that the arrangement includes a D-ring (14) joined to the seat back frame (10) generally adjacent the upper end (12) of the seat back frame (10); the restraint belt (60) is threaded through the D-ring (14); and the D-ring (14) includes mechanism (38) operable to catch the occupant restraint belt (60) upon sudden excessive acceleration of the vehicle (8) in a forward direction so as to tension the restraint belt (60) between the D-ring (14) and the first anchor means (72) to minimise any angular movement of the seat back frame (10) rearwardly relative to the seat pan member (2).

2. A vehicle seat and occupant restraint arrangement (7) according to claim 1, in which the restraint belt (60) passes through an elevated position relative to the D-ring (14), said position being located between the D-ring (14) and the first anchor means (72).

3. A vehicle seat and occupant restraint arrangement (7) according to claim 2, in which the restraint belt (60) also extends rearwardly from the D-ring (14) to the first anchor means (72).

4. A vehicle seat and occupant restraint arrangement (7) according to any one of claims 1 to 3, in which the mechanism (38) in the D-ring (14) is actuated mechanically to catch the restraint belt (60) upon excessive forward acceleration of the vehicle (8).

5. A vehicle seat and occupant restraint arrangement (7) according to claim 1, in which the restraint belt (60) is also a shoulder harness.

6. A vehicle seat and occupant restraint arrangement (7) according to any one of claims 1 to 5, in which the first anchor means includes a retractor (72) which locks the restraint belt (60) upon excessive forward acceleration of the vehicle (8).

7. A vehicle seat and occupant restraint arrangement (7) according to claim 2, in which the elevated position between the D-ring (14) and the first anchor means (72) is defined by a loop (64) through which the belt (60) extends.

8. A vehicle seat and occupant restraint arrangement (7) according to claim 1, in which said first anchor means (72) includes a retractor which locks upon experience of an excessive forward acceleration of the vehicle (8); the occupant restrain belt comprises a shoulder harness (60) with the first end (80) threaded through the D-ring (14) extending upwardly through a loop (64) and then being operatively associated with the first anchor means (72); and the mechanism included in the D-ring comprises an inertia locking means (20,38,50).
